# EUROPÄISCHE PATENTSCHRIFT

(11) **EP 3 533 673 B1**
(45) Veröffentlichungstag und Bekanntmachung des Hinweises auf die Patenterteilung: **11.12.2024**
(21) Anmeldenummer: 19160061.8
(22) Anmeldetag: 28.02.2019
(51) Int. Cl.: B60T 8/17, B60T 13/66, B60T 8/24

(54) **VERFAHREN ZUR BREMSSTEUERUNG EINES FAHRZEUGZUGES**
METHOD FOR CONTROLLING THE BRAKING OF A VEHICLE TRAIN
PROCÉDÉ DE COMMANDE DE FREIN D'UN VÉHICULE TRACTÉ

(30) Priorität: 03.03.2018 DE 102018001695
(43) Veröffentlichungstag der Anmeldung: 04.09.2019
(73) Patentinhaber: ZF CV Systems Europe BV, 1170 Brussels (BE)
(72) Erfinder: BRÜTT, Mirko, 30952 Ronnenberg (DE); SCHMIDT, Jakob Friedrich, 30449 Hannover (DE)
(74) Vertreter: ZF Friedrichshafen AG

(56) Entgegenhaltungen:
- EP-A1- 2 384 941
- EP-A2- 1 820 708
- EP-B1- 1 820 708
- DE-A1- 102014 006 671
- DE-A1- 4 438 252
- DE-C2- 4 438 252
- US-A1- 2014 343 813

## Beschreibung

Die Erfindung betrifft ein Verfahren zur Bremssteuerung eines Fahrzeugzuges, bestehend aus einem Zugfahrzeug und einem Anhängefahrzeug, wobei das Zugfahrzeug eine pneumatische/hydraulische Zugfahrzeugbremsanlage und das Anhängefahrzeug eine pneumatische/hydraulische Anhängerbremsanlage aufweist, mit einem elektrisch steuerbaren Anhängersteuerventil, welchem zumindest eine in einer elektronischen Steuereinrichtung abgespeicherte Anhängersteuerventilkennlinie zur Steuerung eines Anhängerbremsdruckes der Anhängerbremsanlage für einen Normalbetrieb des Fahrzeugzuges zugeordnet ist. Außerdem betrifft die Erfindung einen Fahrzeugzug, welcher derartig ausgebildet und ausgestattet ist, dass das genannte Verfahren an diesem betreibbar ist.

Bei der Bremsbetätigung eines Fahrzeugzuges kann der Bremsdruck an den Bremsen des Anhängefahrzeugs mittels eines elektrisch steuerbaren Anhängersteuerventils geregelt werden. Ein solches Anhängersteuerventil kann nach einer Kennlinie angesteuert werden, welche den Zugmaschinenbremsdruck und den Anhängerbremsdruck in eine feste, beispielsweise weitgehend lineare Beziehung zueinander setzt. Diese Anhängersteuerventilkennlinie wird üblicherweise für alle Betriebssituationen genutzt.

Die Bremsabstimmung zwischen Zugfahrzeug und Anhängefahrzeug ist in einer Norm geregelt, die sogenannte Kompatibilitätsbänder enthält, welche ein Verhältnis zwischen der Abbremsung und dem Druck am Kupplungskopf des Zugfahrzeuges festlegen. Bei einigen Fahrzeugzügen, wie beispielsweise landwirtschaftlichen Fahrzeugzügen, anderen Off-Highway-Fahrzeugzügen oder Lastkraftwagen für Schwer- und Spezialtransporte ist diese Bremsabstimmung allerdings oft problematisch, da derartige Kombinationen von Zugfahrzeug und Anhängefahrzeug im Einsatz sehr unterschiedliche Massen aufweisen können und die Koppelkraft zwischen den Fahrzeugen stark schwanken kann. Weist ein Fahrzeugzug zudem ein hydrostatisches stufenloses Automatikgetriebe auf, so kann allein durch Verändern der Getriebeübersetzung, beispielsweise durch Betätigen eines Bedienhebels oder Gaswegnehmen, der Fahrzeugzug stark verzögert werden, ohne dass hierzu die Betriebsbremse betätigt werden muss. Gleiches gilt bei aktiven Motor- oder Dauerbremsen.

Bei nicht betätigter Betriebsbremse hat eine solche Verzögerung zur Folge, dass das Anhängefahrzeug nicht abgebremst wird und sich somit ungebremst auf das Zugfahrzeug aufschiebt. Bei einer falschen Bremsabstimmung kann es vorkommen, dass in derartigen besonderen Fahrzuständen die tatsächliche Abbremsung nicht der geforderten Abbremsung in den Kompatibilitätsbändern entspricht. Dies kann zu überhöhten Kopplungskräften zwischen Zugfahrzeug und Anhängefahrzeug sowie in der Folge zur Instabilität des Fahrzeugzuges führen. Insbesondere wird ein unter Umständen gefährliches Einknicken der Fahrzeugkombination, das sogenannte "Jack-Knifing", in kritischen Fahrsituationen gefürchtet.

Aus der DE 44 38 252 A1 ist ein Verfahren zur Anpassung der Abbremsung eines Anhängers an ein Zugfahrzeug bekannt. Die US 2014/343813 A1 offenbart eine Methode zur Verhinderung des sogenannten "Jack-Knifing". Aus der EP 1 820 708 A2 ist eine hydraulische Anordnung zum Bremsen eines Anhängers bekannt. Die DE 10 2014 006 671 A1 offenbart ein Verfahren und ein System zur Stabilisierung eines Fahrzeugzuges. Aus der EP 2 384 941 A1 ist ein Verfahren zum Bremsen und ein Bremssystem eines fremdkraftgebremsten Gerätes bekannt.

Aus der DE 42 43 245 A1 ist eine Koppelkraftregelung bei einem Fahrzeugzug bekannt, bei der die Koppelkraft zwischen einem Zugfahrzeug und einem Anhängefahrzeug ermittelt und auf eine Soll-Koppelkraft eingeregelt wird. Damit soll in allen Betriebspunkten ein stabilitätsoptimiertes Abbremsen eines Fahrzeugzuges sichergestellt werden.

Aus der DE 10 2013 103 068 A1 ist ein Verfahren bekannt, bei dem eine Anhängerbremse eines Fahrzeugzuges automatisch aktiviert wird, wenn bei nicht betätigter Reibungsbremse des Zugfahrzeugs eine Verzögerung des Anhängefahrzeugs ermittelt wird, welche einen vorgegebenen Grenzwert überschreitet.

Aus der DE 10 2014 100 069 A1 ist ein Verfahren zum Steuern einer Bremseinrichtung einer Zugfahrzeug-Anhängerkombination bekannt, wobei das Zugfahrzeug beispielsweise ein stufenloses Getriebe aufweist, wobei durch eine elektronische Steuergeräteinrichtung mit einem Fahrzeugsteuergerät und einem elektro-pneumatischen Anhängersteuerventil in einem Fahrzustand mit nicht betätigter Betriebsbremse ein auf das Zugfahrzeug aufschiebender Anhänger erkannt und durch die Steuergeräteinrichtung bei Erreichen oder Überschreiten einer vorbestimmten Schubwirkung des Anhängers eine Bremsanlage des Anhängers bei nicht betätigter Betriebsbremse des Zugfahrzeugs automatisch zur Erzeugung einer Bremskraft betätigt wird. Die Steuergeräteinrichtung erkennt das Erreichen oder Überschreiten der vorbestimmten Schubwirkung des Anhängers, wenn eine Kenngröße einen vorbestimmten, ihr zugeordneten Grenzwert erreicht, überschritten oder unterschritten hat. Als eine Kenngröße herangezogen wird das von einer Antriebsmaschine des Zugfahrzeugs erzeugte Antriebsdrehmoment, beispielsweise das Drehmoment an einer Kurbelwelle und/oder das Abtriebsdrehmoment an wenigstens einem angetriebenen Rad des Zugfahrzeugs. Das Antriebs- oder Abtriebsdrehmoment wird dahingehend überwacht, ob es ein vorbestimmtes Grenzdrehmoment unterschreitet, weil damit eine Verzögerung des Zugfahrzeugs einhergeht.

Vor diesem Hintergrund lag der Erfindung die Aufgabe zugrunde, ein Verfahren zur Bremssteuerung eines Fahrzeugzuges vorzuschlagen, mittels dem eine zuverlässige Einbremsung eines Anhängefahrzeugs in allen Verzögerungssituationen des Fahrzeugzuges sichergestellt ist, und mittels dem gleichzeitig eine komfortable Bremsabstimmung zwischen Zugfahrzeug und Anhängefahrzeug erreicht wird. Insbesondere soll bei Off-Highway-Fahrzeugzügen, wie einer landwirtschaftlichen Zugmaschinen-Anhänger-Kombination oder bei Sattelzügen oder Brückenzügen für Spezialtransporte, welche durch den Betrieb eines stufenlosen Automatikgetriebes im Antriebsstrang, einer Motorbremse, einer Dauerbremse und/oder durch eine stark unterschiedliche Massenverteilung zwischen Zugfahrzeug und Anhängefahrzeug großen Koppelkräften sowie spontanen starken Fahrzeugverzögerungen unterliegen können, eine verbesserte und harmonischere Bremsabstimmung erreicht werden.

Die Lösung dieser Aufgabe wird mit einem Verfahren erreicht, welches die Merkmale des Anspruchs 1 aufweist. Vorteilhafte Ausgestaltungen und Weiterbildungen sind in den abhängigen Ansprüchen definiert.

Der Erfindung lag die Erkenntnis zugrunde, dass bei einem Fahrzeugzug, bestehend aus einem Zugfahrzeug und einem Anhängefahrzeug, eine bessere Bremsabstimmung zwischen den beiden Fahrzeugen erreicht werden kann, wenn anstelle einer fest vorgegebenen Anhängersteuerventilkennlinie variable Kennlinien zur Bremssteuerung des Anhängefahrzeugs verwendet werden. Darin sollen jeweils relevante Parameter berücksichtigt sein. Dadurch wird es möglich, den Anhängerbremsdruck so einzusetzen und zu variieren, dass einem Auflaufen des Anhängefahrzeugs auf das Zugfahrzeug sowie dem geschilderten Jack-Knifing schnell entgegenwirkt werden kann. Dies insbesondere auch dann, wenn beispielsweise spontane Fahrzeugverzögerungen durch Einstellen einer Getriebeübersetzung oder Aktivieren einer Motor- oder Dauerbremse auftreten, oder durch eine große Masse des Anhängers in einer landwirtschaftlichen Anwendung hohe sowie schwankende Koppelkräfte zwischen den Fahrzeugen wirken. Dadurch wird es vereinfacht, die Kompatibilitätsbanden der Bremsabstimmung stets einzuhalten.

Die Erfindung geht daher aus von einem Verfahren zur Bremssteuerung eines Fahrzeugzuges, bestehend aus einem Zugfahrzeug und einem Anhängefahrzeug, wobei das Zugfahrzeug eine pneumatische/hydraulische Zugfahrzeugbremsanlage und das Anhängefahrzeug eine pneumatische/hydraulische Anhängerbremsanlage aufweist, mit einem elektrisch steuerbaren Anhängersteuerventil, welchem zumindest eine in einer elektronischen Steuereinrichtung abgespeicherte Anhängersteuerventilkennlinie zur Steuerung eines Anhängerbremsdruckes der Anhängerbremsanlage für einen Normalbetrieb des Fahrzeugzuges zugeordnet ist.

Zur Lösung der gestellten Aufgabe sieht die Erfindung vor, dass die für den Normalbetrieb des Fahrzeugzuges abgespeicherte Anhängersteuerventilkennlinie bei Erkennen oder Prognostizieren eines von dem Normalbetrieb abweichenden oder als potenziell unzulässig bewerteten Sonderbetriebs des Fahrzeugzuges unter Berücksichtigung von für diese Situation relevanten Parametern variiert oder durch eine Anhängersteuerventilkennlinie für einen Sonderbetrieb ersetzt wird.

Unter einem Normalbetrieb des Fahrzeugzuges wird ein Fahrbetrieb verstanden, in dem bei einer Verzögerung des Fahrzeugzuges aufgrund einer Betätigung einer Bremsanlage des Zugfahrzeuges die Bremsdruckregelung des Anhängefahrzeugs mittels einer für diesen Betrieb abgespeicherten Anhängersteuerventilkennlinie erfolgt.

Das erfindungsgemäße Verfahren beruht darauf, dass die Bremsanlage des Anhängers in einer Sonderbetriebssituation mit einem Bremsdruck betätigt wird, welcher mit Hilfe einer für diese Situation besonders geeigneten Kennlinie variiert wird. Dadurch wird eine sichere und komfortable Einbremsung des Anhängers erreicht. Diese Art der Bremssteuerung wird durch ein elektrisch gesteuertes Anhängersteuerventil möglich, wie es in vielen Fahrzeugzügen bereits vorhanden ist. Vorhandene Sensoreinrichtungen des Antriebsstrangs des Fahrzeugzuges können soweit vorhanden zur Durchführung des Verfahrens verwendet werden. Zusätzliche Sensoreinrichtungen stehen am Markt zur Verfügung und können das System bedarfsweise erweitern. Eine vorhandene elektronische Steuereinrichtung ist lediglich hinsichtlich ihrer Rechenalgorithmen zur Steuerung eines elektrisch steuerbaren Anhängersteuerventils und gegebenenfalls hinsichtlich ihrer Speicherkapazität zur Speicherung von Kennliniendaten anzupassen. An dieser Stelle sei darauf hingewiesen, dass die Steuerkennlinien beziehungsweise Kennliniendaten in der elektronischen Steuereinrichtung vereinfach gesagt in Form von Tabellen oder Wertepaaren abgespeichert sind.

In einem Normalbetrieb des Fahrzeugzuges kann bevorzugt wie bisher die Verwendung einer Anhängersteuerventilkennlinie zur Bremssteuerung vorgesehen sein, welche einen Verlauf eines Zugfahrzeugbremsdruckes der Zugfahrzeugbremsanlage in Bezug zu einem Anhängerbremsdruck der Anhängerbremsanlage abbildet. Dadurch kann auf einfache Weise eine vorteilhafte Grundabstimmung zwischen den Bremsanlagen von Zugfahrzeug und Anhängefahrzeug erreicht werden. Diese Anhängersteuerventilkennlinie ist nun allerdings nicht mehr unveränderlich feststehend für alle Betriebssituationen. Die Erfindung nutzt vorteilhaft die Möglichkeit, diese Anhängersteuerventilkennlinie bedarfsweise zu variieren oder durch eine andere Kennlinie zu ersetzen.

Gemäß einer Ausführungsform des erfindungsgemäßen Verfahrens kann vorgesehen sein, dass das Gewicht des Zugfahrzeuges, das Gewicht des Anhängefahrzeuges, eine Koppelkraft zwischen dem Zugfahrzeug und dem Anhängefahrzeug und/oder ein Bremsdruck oder eine Winkelstellung einer durch ein Lenksystem des Anhängefahrzeuges aktiv- oder zwangsgelenkten Anhängerachse erfasst werden, und dass, in Abhängigkeit des erfassen Wertes mindestens eines dieser Parameter, die Anhängersteuerventilkennlinie für den Normalbetrieb variiert wird, so dass ein als potenziell unzulässig bewerteter Sonderbetrieb des Fahrzeugzuges präventiv vermieden oder zumindest unmittelbar nach dessen Erkennen beendet wird.

Um eine harmonische Bremsabstimmung eines Fahrzeugzuges, beispielsweise bei einem Off-Highway-Fahrzeugzug, wie einer landwirtschaftlichen Zugmaschinen-Anhänger-Kombination oder bei einem Sattelzug oder Brückenzug für Spezialtransporte, zu erreichen, schlägt die Erfindung demnach vor, die Koppelkraft zwischen dem Zugfahrzeug und dem Anhängefahrzeug zu bestimmen sowie eine Anhängersteuerventilkennlinie in Abhängigkeit von der Koppelkraft zu variieren. Die Koppelkraft kann am Koppelpunkt zwischen Zugfahrzeug und Anhängefahrzeug mit Hilfe eines Sensors, wie er beispielsweise in Krafthebern für landwirtschaftliche Traktoren verwendet wird, gemessen werden.

Die erfasste Kraft kann ein Maß dafür sein, welches die zu variierende und schließlich zu nutzende Kennlinie des Anhängersteuerventils beeinflusst. Eine erfasste Schubkraft des Anhängefahrzeugs würde in diesem Fall bedeuten, dass der Druck in der pneumatischen Steuerleitung des Anhängers auf ein bestimmtes höheres Niveau angehoben werden soll, um das Anhängerfahrzeug stärker als bisher abzubremsen. Eine erfasste Zugkraft des Anhängefahrzeugs würde Fall bedeuten, dass der Druck in der pneumatischen Steuerleitung des Anhängers auf ein bestimmtes niedrigeres Niveau abgesenkt werden soll, so dass das Anhängefahrzeug weniger als bisher abgebremst wird. Als ein zusätzlicher Parameter kann das Gewicht und die Gewichtsverteilung der beiden Fahrzeuge in Bezug zueinander herangezogen werden. Mit diesem Verfahren ist es demnach möglich, unmittelbar auf eine unzureichende oder unkomfortable Bremsabstimmung zu reagieren. Die Anpassung der Anhängersteuerventilkennlinie, abhängig von der Koppelkraft zwischen den Fahrzeugen, kann eine harmonische Bremsabstimmung gewährleisten und eine höhere Sicherheit gegen Einknicken des Fahrzeugzuges erzeugen.

Häufig weisen Anhängefahrzeuge für landwirtschaftliche Anwendungen oder zum Transport schwerer Güter ein pneumatisches/hydraulisches/mechanisches Lenksystem auf, beispielsweise eine zwangsgelenkte Nachlaufachse, durch welches eine oder mehrere Achsen des Anhängefahrzeuges gelenkt werden. Bei einem derartigen Anhängefahrzeug kann der pneumatische/hydraulische Druck des Lenksystems oder eine aktuelle Winkelstellung einer gelenkten Achse durch die erwähnte elektronische Steuereinrichtung ermittelt werden. Die aktuellen Werte dieser Parameter können beim Feststellen einer Schubkraft des Anhängefahrzeugs als ein zusätzliches Kriterium zum Erkennen einer Einknickgefahr des Fahrzeugzuges bei nicht betätigter Zugfahrzeugbremsanlage herangezogen werden. Mittels einer geeigneten Anhängersteuerventilkennlinie kann in diesem Fall das Anhängefahrzeug temporär für wenige Sekunden abgebremst werden, um so einem Einknicken des Zuges vorzubeugen.

Erfindungsgemäß ist vorgesehen, dass bei einem Fahrzeugzug, dessen Antriebsstrang ein hydrostatisches stufenloses Automatikgetriebe aufweist, fortlaufend ein Getriebeausgangsdrehmoment des Automatikgetriebes ermittelt wird, dass ein vom Normalbetrieb abweichender Sonderbetrieb des Fahrzeugzuges dann erkannt wird, wenn der Fahrzeugzug in einem Fahrzustand mit unbetätigter Zugfahrzeugbremsanlage aufgrund einer Änderung der Getriebeübersetzung des Automatikgetriebes abgebremst wird, wodurch sich das Anhängefahrzeug auf das Zugfahrzeug aufschiebt, und dass für den Fall dieses erkannten Sonderbetriebs die Anhängersteuerventilkennlinie für den Normalbetrieb durch eine Anhängersteuerventilkennlinie für diesen Sonderbetrieb ersetzt wird, in welcher der Anhängerbremsdruck als Funktion des ermittelten Getriebeausgangsdrehmoments des Automatikgetriebes variiert wird.

Um stets eine zuverlässige Einbremsung des Anhängefahrzeugs eines Fahrzeugzuges zu erreichen, schlägt die Erfindung demnach vor, in Situationen, wenn der Fahrzeugzug verzögert und die Bremsanlage des Zugfahrzeugs nicht betätigt wird, den Anhängerbremsdruck über das Anhängersteuerventil als Funktion des Getriebeausgangsdrehmoments des stufenlosen Automatikgetriebes zu steuern. Das Getriebeausgangsdrehmoment kann aus vorhandenen Daten wie Motorausgangsdrehmoment, Übersetzungsverhältnis und Wirkungsgrad des hydrostatischen Automatikgetriebes und/oder von dem Druck im Hydrauliksystem des Automatikgetriebes abgeleitet werden. Die Beziehung zwischen negativem, also in der Fahrsituation bremsend wirkendem Getriebeausgangsdrehmoment und Anhängerbremsdruck kann von einer Anhängersteuerventilkennlinie, welche den Zugmaschinenbremsdruck und den Anhängerbremsdruck in Beziehung setzt, unter Berücksichtigung einer weiteren Kennlinie, welche den Zugmaschinenbremsdruck und ein ermitteltes Radbremsmoment des Zugfahrzeugs in Beziehung setzt, abgeleitet werden. Dadurch wird eine angeglichene Bremscharakteristik beziehungsweise Fahrzeugdynamik erreicht, egal ob der Fahrer mit der Betriebsbremse oder eine Getriebeübersetzungsänderung den Fahrzeugzug verzögert.

Weiter erfindungsgemäß ist vorgesehen, dass der Anhängerbremsdruck in Abhängigkeit vom Getriebeausgangsdrehmoment des Automatikgetriebes gesteuert wird, wenn das ermittelte Getriebeausgangsdrehmoment einen vorgegebenen Drehmomentgrenzwert in Richtung zunehmender Fahrzeugverzögerung überschritten hat.

Um zu vermeiden, dass die Anhängerbremsen zu häufig betätigt werden, ist es vorteilhaft, die Anhängerbremsen nur dann mit einem Anhängerbremsdruck zu beaufschlagen, wenn eine bestimmte negative Getriebeausgangsdrehmomentschwelle überschritten worden ist.

Gemäß einer weiteren Ausführungsform der Erfindung kann vorgesehen sein, dass bei einem Fahrzeugzug, dessen Antriebsstrang eine Motorbremse aufweist, fortlaufend ein Motorbremsmoment ermittelt wird, dass ein vom Normalbetrieb abweichender Sonderbetrieb des Fahrzeugzuges erkannt wird, wenn der Fahrzeugzug in einem Fahrzustand mit unbetätigter Zugfahrzeugbremsanlage aufgrund eines Motorbremsmoments abgebremst wird, wodurch sich das Anhängefahrzeug auf das Zugfahrzeug aufschiebt, und dass für den Fall dieses erkannten Sonderbetriebs die Anhängersteuerventilkennlinie für den Normalbetrieb durch eine Anhängersteuerventilkennlinie für diesen Sonderbetrieb ersetzt wird, in welcher der Anhängerbremsdruck als Funktion des erfassten Motobremsmoments variiert wird. Dadurch ist bei einer signifikanten Verzögerung des Fahrzeugzuges im Fahrbetrieb durch die Motorbremse ein zuverlässiges Abbremsen des Anhängers gewährleistet.

Eine andere Weiterbildung des erfindungsgemäßen Verfahrens sieht vor, dass bei einem Fahrzeugzug, dessen Antriebsstrang eine Dauerbremse aufweist, fortlaufend ein Dauerbremsmoment ermittelt wird, dass ein vom Normalbetrieb abweichender Sonderbetrieb des Fahrzeugzuges erkannt wird, wenn der Fahrzeugzug in einem Fahrzustand mit unbetätigter Zugfahrzeugbremsanlage aufgrund eines Dauerbremsmoments abgebremst wird, wodurch sich das Anhängefahrzeug auf das Zugfahrzeug aufschiebt, und dass für den Fall dieses erkannten Sonderbetriebs die Anhängersteuerventilkennlinie für den Normalbetrieb durch eine Anhängersteuerventilkennlinie für diesen Sonderbetrieb ersetzt wird, in welcher der Anhängerbremsdruck als Funktion des erfassten Dauerbremsmoments variiert wird. Dadurch ist bei einer signifikanten Verzögerung des Fahrzeugzuges im Fahrbetrieb durch die Dauerbremse ein zuverlässiges Abbremsen des Anhängers gewährleistet.

Die beschriebenen Ausführungsformen der Erfindung können auch miteinander kombiniert werden. So ist es beispielweise möglich, bei einem Fahrzeugzug mit einem stufenlosen Automatikgetriebe sowohl das Getriebeausgangsdrehmoment des Getriebes als auch die Koppelkraft zwischen Zugfahrzeug und Anhängefahrzeug zu messen und eine bisher genutzte Anhängersteuerventilkennlinie entsprechend anzupassen oder durch eine geeignete Anhängersteuerventilkennlinie zu ersetzen. Der Vorteil des erfindungsgemäßen Verfahrens ist eine angeglichene Bremscharakteristik beziehungsweise Fahrzeugdynamik, egal ob der Fahrer mit der Betriebsbremse oder mit dem Getriebe, Motor oder einer Dauerbremse den Fahrzeugzug verzögert.

Exemplarisch wird ein Fahrzeugzug beschrieben, wie beispielsweise eine landwirtschaftliche Zugmaschinen-Anhänger-Kombination, ein Sattelzug oder ein Brückenzug, mit einem elektronisch gesteuerten Anhängersteuerventil, mit einer elektronischen Steuereinrichtung zur Steuerung des Anhängersteuerventils, mit einem elektronischen Speicher zur Abspeicherung von Anhängersteuerventilkennlinien sowie mit Sensormitteln zur Erfassung von relevanten Parametern, wie einem Getriebeausgangsdrehmoment eines hydrostatisches stufenloses Automatikgetriebes, dem Gewicht von Zugfahrzeug und von Anhängefahrzeug, einer Koppelkraft zwischen den beiden Fahrzeugen und/oder einer Winkelstellung einer gelenkten Anhängerachse, bei dem ein Verfahren zur Bremssteuerung des Fahrzeugzuges wie oben beschrieben und in den Ansprüchen angegeben durchführbar ist.

Die Erfindung wird nachstehend anhand von einem in der beigefügten Zeichnung dargestellten Ausführungsbeispiel weiter erläutert. In der Zeichnung zeigt
Fig. 1 eine schematische Draufsicht auf einen Fahrzeugzug,
Fig. 2 eine Anhängersteuerventilkennlinie für einen Normalbetrieb eines Fahrzeugzuges gemäß Fig. 1,
Fig. 3 eine Radbremsmomentkennlinie des Zugfahrzeuges gemäß Fig. 1, und
Fig. 4 eine Anhängersteuerventilkennlinie für einen Sonderbetrieb des Fahrzeugzuges gemäß Fig. 1,

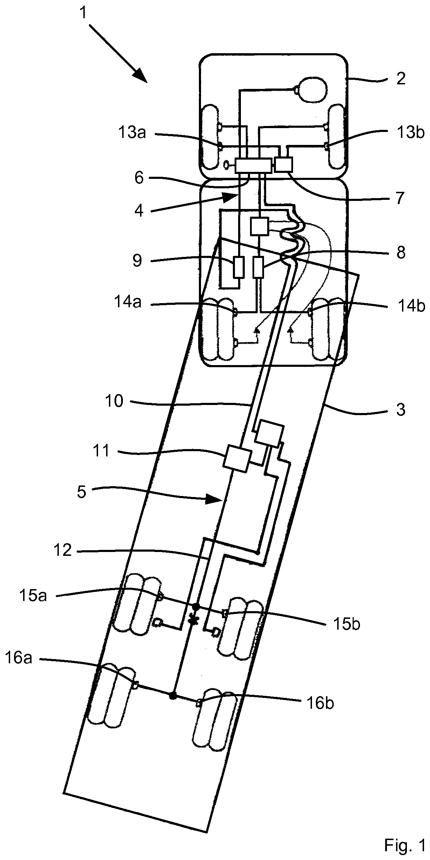

Die Fig. 1 zeigt demnach beispielhaft einen aus der DE 103 01 096 A1 bekannten Fahrzeugzug 1, an dem das Verfahren gemäß der Erfindung durchführbar ist. Der Fahrzeugzug 1 besteht aus einem Zugfahrzeug 2, an das ein Anhängefahrzeug 3 angekoppelt ist. Das Zugfahrzeug 2 weist eine Zugfahrzeugbremsanlage 4 zur Abbremsung des Zugfahrzeugs 2 auf. Das Anhängefahrzeug 3 weist eine Anhängerbremsanlage 5 zur Abbremsung des Anhängefahrzeugs 3 auf. Die beiden Bremsanlagen 4, 5 sind als Teil eines Bremssystems mit Druckmittel wie Druckluft oder Drucköl betätigbar. Der Aufbau eines derartigen Bremssystems ist in der genannten DE 103 01 096 A1 beschrieben. Die nachfolgende Beschreibung beschränkt sich auf die für Erfindung relevanten Komponenten des Bremssystems.

Demnach ist in dem Zugfahrzeug 2 eine elektronische Steuereinrichtung 6 angeordnet, die zur Steuerung verschiedener Bremsfunktionen der Fahrzeugzuges 1 dient. Die Steuereinrichtung 6 ist mit einem Vorderachsventil 7 der Zugfahrzeugbremsanlage 4 zur Steuerung des Bremsdruckes in den Radbremsen 13a, 13b der Vorderräder sowie mit einem Hinterachsventil 8 der Zugfahrzeugbremsanlage 4 zur Steuerung des Bremsdruckes in den Radbremsen 14a, 14b der Hinterräder des Zugfahrzeugs 2 elektrisch verbunden. Außerdem ist die elektronische Steuereinrichtung 6 mit einem elektrisch steuerbaren Anhängersteuerventil 9 zur Steuerung des Bremsdruckes in den Radbremsen 15a, 15b, 16a, 16b des Anhängefahrzeugs 3 elektrisch verbunden. Das Anhängersteuerventil 9 ist über eine erste Bremsleitung 10 mit einem weiteren, als Anhängerachsventil 11 ausgebildeten Ventil druckmittelverbunden, welches hier nicht von Bedeutung ist. Das Anhängerachsventil 11 ist über eine zweite Bremsleitung 12 mit den Radbremsen 15a, 15b, 16a, 16b des Anhängefahrzeugs 3 druckmittelverbunden. Über das Anhängersteuerventil 9 sind die Bremsleitungen 10, 12 für die Radbremsen 15a, 15b, 16a, 16b des Anhängefahrzeugs 3 mit Bremsdruck beaufschlagbar. Der Anhängerbremsdruck p_trailer kann, wie im Folgenden erläutert, mittels der Steuereinrichtung 6 sowie des Anhängersteuerventils 9 gesteuert und variiert werden. Die Bremssteuerung des Anhängefahrzeugs 3 erfolgt gemäß der Erfindung kennliniengesteuert.

Außerdem verfügt der Fahrzeugzug 1 über verschiedene Sensoren für eine Fahrdynamikregelung und für ein Antiblockiersystem, wie Raddrehzahlsensoren, Lenkwinkelsensoren, Querbeschleunigungssensoren und Gierratensensoren sowie zugehörige Verbindungsleitungen, welche die genannten Sensoren mit der elektronische Steuereinrichtung 6 signaltechnisch verbinden. Diese Komponenten sind in dem Fahrzeugzug 1 gemäß Fig. 1 dargestellt, jedoch nicht mit Bezugszeichen versehen und müssen nicht weiter erläutert werden.

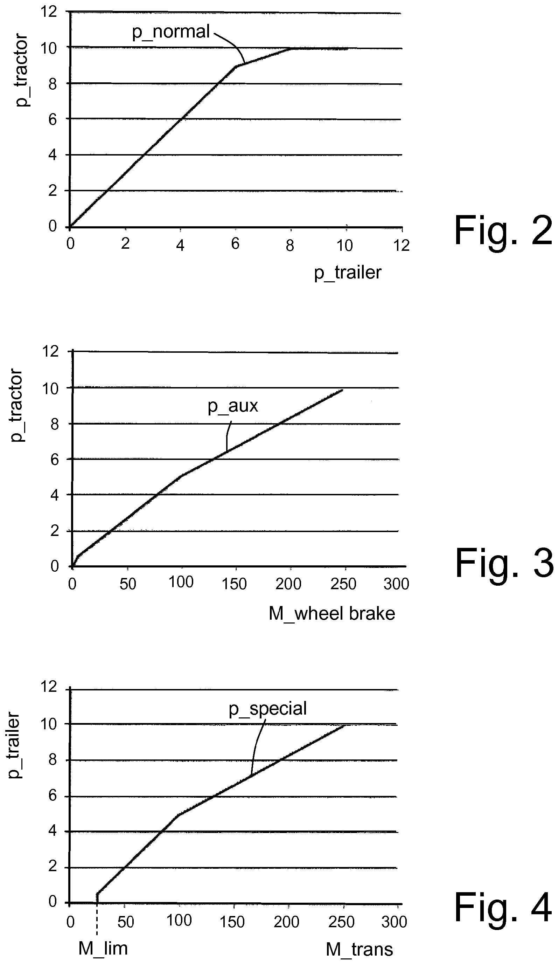

Die Fig. 2 zeigt eine Anhängersteuerventilkennlinie p_normal für einen Normalbetrieb des Fahrzeugzuges 1 gemäß Fig. 1. In dieser Kennlinie ist der Bremsdruck p_tractor des Zugfahrzeuges 2 gegen den Bremsdruck p_trailer des Anhängefahrzeugs 3 aufgetragen. Die Anhängersteuerventilkennlinie p_normal verläuft bis zum Erreichen eines maximalen Systemdrucks, der hier beispielsweise 10 Druckeinheiten beträgt, annähernd linear. Wenn der Antriebsstrang des Fahrzeugzuges 1 allerdings ein stufenloses Automatikgetriebe aufweist, kann der Fahrzeugzug aufgrund einer Veränderung einer Übersetzung des stufenlosen Automatikgetriebes und ohne die Betriebsbremse des Zugfahrzeuges 2 zu betätigen im Fahrbetrieb verzögern. Der Fahrer kann beispielsweise diese Möglichkeit der Fahrzeugabbremsung mittels eines Bedienhebels oder durch Gaswegnehmen beeinflussen sowie gezielt einsetzen. In diesem Fall liefert die Anhängersteuerventilkennlinie p_normal für den Normalbetrieb keinen Anhängerbremsdruck p_trailer und das Anhängefahrzeug 3 würde auf das Zugfahrzeug 2 ungebremst auflaufen. Diese Situation wird von der Steuereinrichtung 6 als ein Sonderbetrieb erkannt.

Fig. 4 zeigt eine neue Anhängersteuerventilkennlinie p_special für diesen Sonderbetrieb, welche die Steuereinrichtung 6 für die Bremssteuerung des Anhängefahrzeugs 3 verwendet. In dem Diagramm gemäß Fig. 4 ist die Anhängersteuerventilkennlinie für den Sonderbetrieb p_special dargestellt, welche die Abhängigkeit des Bremsdrucks p_trailer des Anhängefahrzeugs 3 vom Getriebeausgangsdrehmoment M_trans des Automatikgetriebes angibt.

Diese Anhängersteuerventilkennlinie p_special ist aus der in Fig. 2 dargestellten Anhängersteuerventilkennlinie p_normal für den Normalbetrieb und einer in Fig. 3 dargestellten Hilfskennlinie p_aux, in welcher der Zugfahrzeugbremsdruck p_tractor gegen ein Radbremsmoment M_wheel brake des Zugfahrzeuges 2 aufgetragen ist, abgeleitet. Das Radbremsmoment M_wheel brake des Zugfahrzeuges 2 wird im Fahrbetrieb gemessen und hier eindeutig mit dem Getriebeausgangsdrehmoment M_trans korreliert.

Die Steuerung des Anhängerbremsdrucks p_trailer setzt gemäß dem Diagramm in Fig. 4 sinnvollerweise erst ab einem unteren Drehmomentgrenzwert M_lim ein, welcher eine signifikante Fahrzeugverzögerung mit Aufschieben des Anhängefahrzeugs 3 zur Folge hat. Mit Hilfe der Anhängersteuerventilkennlinie p_special für den Sonderbetrieb wird das Anhängefahrzeug 3 zuverlässig abgebremst, wenn der Fahrzeugzug 1 aufgrund einer Getriebeübersetzungsänderung ohne Betätigung der Betriebsbremse verzögert und die Anhängersteuerventilkennlinie p_normal für den Normalbetrieb daher nicht wirksam ist.

Für das Ausgangsmoment einer Motorbremse oder das Ausgangmoment einer Dauerbremse des Zugfahrzeugs 2 können analoge Anhängersteuerventilkennlinien für einen Sonderbetrieb abgeleitet und zur Bremssteuerung des Anhängefahrzeugs 3 eingesetzt werden.

Bei einem weiteren, hier nicht ausführlicher erläuterten Ausführungsbeispiel kann bei einer Erfassung einer Koppelkraft zwischen den Fahrzeugen 2, 3 eine ähnliche Anhängersteuerventilkennlinie abgeleitet sowie zur Bremssteuerung des Anhängefahrzeugs 3 verwendet werden.

### Bezugszeichenliste (Bestandteil der Beschreibung)

- 1: Fahrzeugzug
- 2: Zugfahrzeug
- 3: Anhängefahrzeug
- 4: Zugfahrzeugbremsanlage
- 5: Anhängerbremsanlage
- 6: Elektronische Steuereinrichtung
- 7: Vorderachsventil
- 8: Hinterachsventil
- 9: Anhängersteuerventil
- 10: Erste Bremsleitung
- 11: Anhängerachsventil
- 12: Zweite Bremsleitung
- 13a, 13b: Vorderachsradbremsen
- 14a, 14b: Hinterachsradbremsen
- 15a, 15b: Erste Anhängeachsradbremsen
- 16a, 16b: Zweite Anhängerachsradbremsen
- M_lim: Drehmomentgrenzwert
- M_trans: Getriebeausgangsdrehmoment
- M_wheel brake: Radbremsmoment
- p_aux: Hilfskennlinie
- p_normal: Anhängersteuerventilkennlinie für Normalbetrieb
- p_special: Anhängersteuerventilkennlinie für Sonderbetrieb
- p_tractor: Zugfahrzeugbremsdruck
- p_trailer: Anhängerbremsdruck

## Patentansprüche

1. Verfahren zur Bremssteuerung eines Fahrzeugzuges (1), bestehend aus einem Zugfahrzeug (2) und einem Anhängefahrzeug (3), wobei das Zugfahrzeug (2) eine pneumatische/hydraulische Zugfahrzeugbremsanlage (4) und das Anhängefahrzeug (3) eine pneumatische/hydraulische Anhängerbremsanlage (5) aufweist, mit einem elektrisch steuerbaren Anhängersteuerventil (9), welchem zumindest eine in einer elektronischen Steuereinrichtung (6) abgespeicherte Anhängersteuerventilkennlinie (p_normal) zur Steuerung eines Anhängerbremsdruckes (p_trailer) der Anhängerbremsanlage (5) für einen Normalbetrieb des Fahrzeugzuges (1) zugeordnet ist, wobei die für den Normalbetrieb des Fahrzeugzuges (1) abgespeicherte Anhängersteuerventilkennlinie (p_normal) bei Erkennen oder Prognostizieren eines von dem Normalbetrieb abweichenden oder als potenziell unzulässig bewerteten Sonderbetriebs des Fahrzeugzuges (1) unter Berücksichtigung von für diese Situation relevanten Parametern variiert oder durch eine Anhängersteuerventilkennlinie für einen Sonderbetrieb (p_special) ersetzt wird, wobei bei dem Fahrzeugzug (1), dessen Antriebsstrang ein hydrostatisches stufenloses Automatikgetriebe aufweist, fortlaufend ein Getriebeausgangsdrehmoment (M_trans) des Automatikgetriebes ermittelt wird, wobei ein vom Normalbetrieb abweichender Sonderbetrieb des Fahrzeugzuges (1) dann erkannt wird, wenn der Fahrzeugzug (1) in einem Fahrzustand mit unbetätigter Zugfahrzeugbremsanlage (4) aufgrund einer Änderung der Getriebeübersetzung des Automatikgetriebes abgebremst wird, wodurch sich das Anhängefahrzeug (3) auf das Zugfahrzeug (2) aufschiebt, und wobei für den Fall dieses erkannten Sonderbetriebs die Anhängersteuerventilkennlinie für den Normalbetrieb (p_normal) durch eine Anhängersteuerventilkennlinie für diesen Sonderbetrieb (p_special) ersetzt wird, in welcher der Anhängerbremsdruck (p_trailer) als Funktion des ermittelten Getriebeausgangsdrehmoments (M_trans) des Automatikgetriebes variiert wird, **dadurch gekennzeichnet, dass** der Anhängerbremsdruck (p_trailer) in Abhängigkeit vom Getriebeausgangsdrehmoment (M_trans) des Automatikgetriebes gesteuert wird, wenn das ermittelte Getriebeausgangsdrehmoment (M_trans) einen vorgegebenen Drehmomentgrenzwert (M_lim) in Richtung zunehmender Fahrzeugverzögerung überschritten hat.

2. Verfahren nach Anspruch 1, **dadurch gekennzeichnet, dass** die Anhängersteuerventilkennlinie für den Normalbetrieb (p_normal) des Fahrzeugzuges (1) den Verlauf eines Zugfahrzeugbremsdruckes (p_tractor) der Zugfahrzeugbremsanlage (4) in Bezug zu einem Anhängerbremsdruck (p_trailer) der Anhängerbremsanlage (5) angibt.

3. Verfahren nach Anspruch 1 oder 2, **dadurch gekennzeichnet, dass** das Gewicht des Zugfahrzeuges (2), das Gewicht des Anhängefahrzeuges (3), eine Koppelkraft zwischen dem Zugfahrzeug (2) und dem Anhängefahrzeug (3) und/oder ein Bremsdruck oder eine Winkelstellung einer durch ein Lenksystem des Anhängefahrzeuges (3) aktiv- oder zwangsgelenkten Anhängerachse erfasst werden, und dass, in Abhängigkeit des erfassen Wertes mindestens eines dieser Parameter, die Anhängersteuerventilkennlinie (p_normal) für den Normalbetrieb variiert wird, so dass ein als potenziell unzulässig bewerteter Sonderbetrieb des Fahrzeugzuges (1) präventiv vermieden oder zumindest unmittelbar nach dessen Erkennen beendet wird.

4. Verfahren nach einem der Ansprüche 1 bis 3, **dadurch gekennzeichnet, dass** bei einem Fahrzeugzug (1), dessen Antriebsstrang eine Motorbremse aufweist, fortlaufend ein Motorbremsmoment ermittelt wird, wobei ein vom Normalbetrieb abweichender Sonderbetrieb des Fahrzeugzuges (1) erkannt wird, wenn der Fahrzeugzug (1) in einem Fahrzustand mit unbetätigter Zugfahrzeugbremsanlage (4) aufgrund eines Motorbremsmoments abgebremst wird, wodurch sich das Anhängefahrzeug (3) auf das Zugfahrzeug (2) aufschiebt, wobei für den Fall dieses erkannten Sonderbetriebs die Anhängersteuerventilkennlinie für den Normalbetrieb (p_normal) durch eine Anhängersteuerventilkennlinie für diesen Sonderbetrieb (p_special) ersetzt wird, in welcher der Anhängerbremsdruck (p_trailer) als Funktion des erfassten Motobremsmoments variiert wird.

5. Verfahren nach einem der Ansprüche 1 bis 4, **dadurch gekennzeichnet, dass** bei einem Fahrzeugzug (1), dessen Antriebsstrang eine Dauerbremse aufweist, fortlaufend ein Dauerbremsmoment erfasst wird, wobei ein vom Normalbetrieb abweichender Sonderbetrieb des Fahrzeugzuges (1) erkannt wird, wenn der Fahrzeugzug (1) in einem Fahrzustand mit unbetätigter Zugfahrzeugbremsanlage aufgrund eines Dauerbremsmoments abgebremst wird, wodurch sich das Anhängefahrzeug (3) auf das Zugfahrzeug (2) aufschiebt, wobei für den Fall dieses erkannten Sonderbetriebs die Anhängersteuerventilkennlinie für den Normalbetrieb (p_normal) durch eine Anhängersteuerventilkennlinie für diesen Sonderbetrieb (p_special) ersetzt wird, in welcher der Anhängerbremsdruck (p_trailer) als Funktion des erfassten Dauerbremsmoments variiert wird.

## Claims

1. Method for brake control of a vehicle combination (1) consisting of a tractor vehicle (2) and a towed vehicle (3), wherein the tractor vehicle (2) has a pneumatic/hydraulic tractor vehicle brake system (4) and the towed vehicle (3) has a pneumatic/hydraulic trailer brake system (5), with an electrically controllable trailer control valve (9) which is assigned at least one trailer control valve characteristic curve (p_normal) which is stored in an electronic control device (6) for controlling a trailer brake pressure (p_trailer) of the trailer brake system (5) for normal operation of the vehicle combination (1), wherein, in the case of detection or prediction of special operation of the vehicle combination (1) which deviates from normal operation or is evaluated as potentially impermissible, the trailer control valve characteristic curve (p_normal) which is stored for normal operation of the vehicle combination (1) varies with consideration of parameters relevant to this situation or is replaced by a trailer control valve characteristic curve for special operation (p_special), wherein, in the case of the vehicle combination (1), the drive train of which has a hydrostatic continuously variable automatic transmission, a transmission output torque (M_trans) of the automatic transmission is continuously determined, wherein special operation, deviating from normal operation, of the vehicle combination (1) is detected when the vehicle combination (1) is braked in a travelling state with an unactuated tractor vehicle brake system (4) on the basis of a change in the transmission ratio of the automatic transmission, as a result of which the towed vehicle (3) pushes against the tractor vehicle (2), and wherein, for the case of this detected special operation, the trailer control valve characteristic curve for normal operation (p_normal) is replaced by a trailer control valve characteristic curve for this special operation (p_special), in which the trailer brake pressure (p_trailer) is varied as a function of the determined transmission output torque (M_trans) of the automatic transmission, **characterized in that** the trailer brake pressure (p_trailer) is controlled in a manner which is dependent on the transmission output torque (M_trans) of the automatic transmission if the determined transmission output torque (M_trans) has exceeded a predefined torque limit value (M_lim) in the direction of increasing vehicle retardation.

2. Method according to Claim 1, **characterized in that** the trailer control valve characteristic curve for normal operation (p_normal) of the vehicle combination (1) specifies the profile of a tractor vehicle brake pressure (p_tractor) of the tractor vehicle brake system (4) in relation to a trailer brake pressure (p_trailer) of the trailer brake system (5).

3. Method according to Claim 1 or 2, **characterized in that** the weight of the tractor vehicle (2), the weight of the towed vehicle (3), a coupling force between the tractor vehicle (2) and the towed vehicle (3) and/or a brake pressure or an angular position of a trailer axle which is steered in an active or forced manner by a steering system of the towed vehicle (3) are/is detected, and **in that**, in a manner which is dependent on the detected value of at least one of these parameters, the trailer control valve characteristic curve (p_normal) for normal operation is varied, with the result that special operation, evaluated as potentially impermissible, of the vehicle combination (1) is preventatively avoided or at least ended directly after it is detected.

4. Method according to one of Claims 1 to 3, **characterized in that**, in the case of a vehicle combination (1), the drive train of which has an engine brake, an engine braking torque is continuously determined, wherein special operation, deviating from normal operation, of the vehicle combination (1) is detected if the vehicle combination (1) is braked on account of an engine braking torque in a travelling state with an unactuated tractor vehicle brake system (4), as a result of which the towed vehicle (3) pushes against the tractor vehicle (2), wherein, for the case of this detected special operation, the trailer control valve characteristic curve for normal operation (p_normal) is replaced by a trailer control valve characteristic curve for this special operation (p_special), in which the trailer brake pressure (p_trailer) is varied as a function of the detected engine braking torque.

5. Method according to one of Claims 1 to 4, **characterized in that**, in the case of a vehicle combination (1), the drive train of which has a retarder brake, a retarder braking torque is detected continuously, wherein special operation, deviating from normal operation, of the vehicle combination (1) is detected if the vehicle combination (1) is braked on account of a retarder braking torque in a travelling state with an unactuated tractor vehicle brake system, as a result of which the towed vehicle (3) pushes against the tractor vehicle (2), wherein, for the case of this detected special operation, the trailer control valve characteristic curve for normal operation (p_normal) is replaced by a trailer control valve characteristic curve for this special operation (p_special), in which the trailer brake pressure (p_trailer) is varied as a function of the detected retarder braking torque.

## Revendications

1. Procédé de commande de frein d'un train routier (1), constitué d'un véhicule tracteur (2) et d'un véhicule remorque (3), dans lequel le véhicule tracteur (2) présente un système de freinage de véhicule tracteur (4) pneumatique/hydraulique et le véhicule remorque (3) présente un système de freinage de remorque (5) pneumatique/hydraulique, comportant une soupape de commande de remorque (9) pouvant être commandée électriquement, à laquelle est associée au moins une courbe caractéristique de soupape de commande de remorque (p_normal) enregistrée dans un dispositif de commande (6) électronique pour la commande d'une pression de freinage de remorque (p_trailer) du système de freinage de remorque (5) pour un fonctionnement normal du train routier (1), dans lequel la courbe caractéristique de soupape de commande de remorque (p_normal) enregistrée pour le fonctionnement normal du train routier (1), lors de l'identification ou de la prédiction d'un fonctionnement spécial du train routier (1) différent du fonctionnement normal ou évalué comme potentiellement inadmissible, varie en tenant compte de paramètres pertinents pour cette situation ou est remplacée par une courbe caractéristique de soupape de commande de remorque pour un fonctionnement spécial (p_special), dans lequel, dans le cas du train routier (1), dont la chaîne cinématique présente une transmission automatique hydrostatique à réglage continu, un couple de sortie de transmission (M_trans) de la transmission automatique est déterminé en continu, dans lequel un fonctionnement spécial, différent du fonctionnement normal, du train routier (1) est identifié lorsque le train routier (1) est freiné dans un état de conduite avec système de freinage de véhicule tracteur (4) non actionné en raison d'un changement du rapport de transmission de la transmission automatique, de telle sorte que le véhicule remorque (3) soit poussé sur le véhicule tracteur (2), et dans lequel, dans le cas de ce fonctionnement spécial identifié, la courbe caractéristique de soupape de commande de remorque pour le fonctionnement normal (p_normal) est remplacée par une courbe caractéristique de soupape de commande de remorque pour ce fonctionnement spécial (p_special), dans laquelle la pression de freinage de remorque (p_trailer) est modifiée en tant que fonction du couple de sortie de transmission (M_trans) déterminé de la transmission automatique,
**caractérisé en ce que**
la pression de freinage de remorque (p_trailer) est commandée en fonction du couple de sortie de transmission (M_trans) de la transmission automatique, lorsque le couple de sortie de transmission (M_trans) déterminé a dépassé une valeur limite de couple (M_lim) prédéfinie vers une décélération de véhicule croissante.

2. Procédé selon la revendication 1, **caractérisé en ce que** la courbe caractéristique de soupape de commande de remorque pour le fonctionnement normal (p_normal) du train routier (1) spécifie le profil d'une pression de freinage de véhicule tracteur (p_tractor) du système de freinage de véhicule tracteur (4) par rapport à une pression de freinage de remorque (p_trailer) du système de freinage de remorque (5).

3. Procédé selon la revendication 1 ou 2, **caractérisé en ce que** le poids du véhicule tracteur (2), le poids du véhicule remorque (3), une force d'attelage entre le véhicule tracteur (2) et le véhicule remorque (3) et/ou une pression de freinage ou une position angulaire d'un essieu de remorque orientable de manière active ou forcée au moyen d'un système de direction du véhicule remorque (3) sont détectés, et **en ce qu'**en fonction de la valeur détectée d'au moins l'un de ces paramètres, la courbe caractéristique de soupape de commande de remorque (p_normal) pour le fonctionnement normal est modifiée, de sorte qu'un fonctionnement spécial, évalué comme potentiellement inadmissible, du train routier (1) soit évité de manière préventive ou au moins terminé immédiatement après son identification.

4. Procédé selon l'une des revendications 1 à 3, **caractérisé en ce que**, dans le cas d'un train routier (1), dont la chaîne cinématique présente un frein moteur, un couple de frein moteur est déterminé en continu, dans lequel un fonctionnement spécial, différent du fonctionnement normal, du train routier (1) est identifié lorsque le train routier (1) est freiné dans un état de conduite avec système de freinage de véhicule tracteur (4) non actionné en raison d'un couple de frein moteur, de telle sorte que le véhicule remorque (3) soit poussé sur le véhicule tracteur (2), dans lequel, dans le cas de ce fonctionnement spécial identifié, la courbe caractéristique de soupape de commande de remorque pour le fonctionnement normal (p_normal) est remplacée par une courbe caractéristique de soupape de commande de remorque pour ce fonctionnement spécial (p_special), dans laquelle la pression de freinage de remorque (p_trailer) est modifiée en tant que fonction du couple de frein moteur détecté.

5. Procédé selon l'une des revendications 1 à 4, **caractérisé en ce que**, dans le cas d'un train routier (1), dont la chaîne cinématique présente un frein continu, un couple de frein continu est détecté en continu, dans lequel un fonctionnement spécial, différent du fonctionnement normal, du train routier (1) est identifié lorsque le train routier (1) est freiné dans un état de conduite avec système de freinage de véhicule tracteur non actionné en raison d'un couple de frein continu, de telle sorte que le véhicule remorque (3) soit poussé sur le véhicule tracteur (2), dans lequel, dans le cas de ce fonctionnement spécial identifié, la courbe caractéristique de soupape de commande de remorque pour le fonctionnement normal (p_normal) est remplacée par une courbe caractéristique de soupape de commande de remorque pour ce fonctionnement spécial (p_special), dans laquelle la pression de freinage de remorque (p_trailer) est modifiée en tant que fonction du couple de frein continu détecté.
